**Europäisches Patentamt**

**European Patent Office**

**Office européen des brevets**

(19)

(11) Veröffentlichungsnummer: **0 042 597**
**B1**

(12) **EUROPÄISCHE PATENTSCHRIFT**

(45) Veröffentlichungstag der Patentschrift:
03.09.86

(51) Int. Cl.⁴: **B 60 H 1/00**, B 62 D 33/06

(21) Anmeldenummer: **81104717.4**

(22) Anmeldetag: **19.06.81**

(54) **Luftverteileinrichtung.**

(30) Priorität: **23.06.80 US 162402**

(43) Veröffentlichungstag der Anmeldung:
**30.12.81 Patentblatt 81/52**

(45) Bekanntmachung des Hinweises auf die Patenterteilung:
**03.09.86 Patentblatt 86/36**

(84) Benannte Vertragsstaaten:
**AT DE FR GB IT SE**

(56) Entgegenhaltungen:
US-A-3 555 846
US-A-4 072 487
US-A-4 068 364
US-A-4 120 527

(73) Patentinhaber: **DEERE & COMPANY, 1 John Deere Road, Moline Illinois 61265 (US)**

(72) Erfinder: **Casterton, Robert Henry, 3331 Mt. Vernon Drive, Waterloo, Iowa 50701 (US)**
Erfinder: **Phippen, Larry Jay, 1222 West Ridgeway Avenue, Waterloo, Iowa 50701 (US)**
Erfinder: **Wright, Darrel Lynn, 4317 Clearview Drive, Cedar Falls, Iowa 50613 (US)**

(74) Vertreter: **Gramm, Werner, Prof. Dipl.- Ing., Patentanwälte Gramm + Lins Theodor- Heuss- Strasse 2, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Luftverteileinrichtung, die insbesondere für das Fahrerhaus eines Fahrzeuges, z.B. eines Traktors, geeignet ist, bestehend aus zwei Gebläsen, von denen das erste Gebläse von außen Frischluft in das Fahrerhaus saugt, aus einem dem ersten Gebläse vorgeschalteten Filter, aus einem dem ersten Gebläse nachgeschalteten Temperaturregler zum Erwärmen oder Kühlen der angesaugten Luft, und aus Leitungen zur Luftführung und -verteilung im Innenraum des Fahrerhauses.

Eine derartige Einrichtung läßt sich beispielsweise der US-A-4 072 487 entnehmen. Hier ist zumindest eine der beiden rückwärtigen Vertikalstreben des Fahrerhauses hohl ausgebildet und dient als Luftkanal, der mit seinem oberen Ende an einen oberhalb des Rückfensters angeordneten Querkanal angeschlossen ist. Letzterer weist nach unten gerichtete Ansaugöffnungen auf und umschließt zwei gemeinsam von einem Motor angetriebene Gebläse, deren Ansaugstutzen jeweils ein Filter vorgeschaltet ist. Die von den beiden Gebläsen angesaugte Luft wird durch die hohl ausgebildeten Vertikalstreben des Fahrerhauses nach unten in eine Kammer geleitet, wo sie von einem weiteren Gebläse angesaugt und durch einen Wärmeaustauscher hindurchgeführt wird. Anschließend wird die so aufbereitete Luft im Innenraum verteilt.

Bei dieser Einrichtung sind die beiden Gebläse in Reihe hintereinander geschaltet, so daß sich nur eine einzige Luftströmung ergibt. Möchte der Fahrer die Menge der Luftströmung innerhalb der Kabine verändern, so läßt sich dies nur durch Veränderung der angesaugten Frischluftmenge erreichen. Es fehlt dann aber die Möglichkeit, innerhalb der Kabine einen weitgehend konstanten Luftdruck aufrechtzuerhalten. Sinkt der Luftinnendruck im Fahrerhaus zu weit ab, kann staubige Luft von außen durch die zahlreichen Undichtigkeiten in das Fahrerhaus eindringen. Dies führt zu einer unerfreulichen Umgebung für den Fahrer, da die eindringende Luft weder gefiltert noch temperiert ist.

Der Erfindung liegt die Aufgabe zugrunde, die eingangs erläuterte Luftverteileinrichtung so zu verbessern, daß sich einerseits ein weitgehend konstanter Kabinen-Luftdruck aufrechterhalten läßt, andererseits aber die Möglichkeit besteht, die Luftströmung innerhalb der Kabine zu variieren.

Diese Aufgabe wird gemäß der Erfindung dadurch gelöst, daß das in der Nähe des ersten Gebläses angeordnete zweite Gebläse Rauminnenluft umwälzt und dabei die angesaugte Innenluft in eine Mischzone drückt, die zwischen den Druckstutzen des ersten Gebläses und den genannten Temperaturregler geschaltet ist.

Dabei ist es zweckmäßig, wenn das erste Gebläse ein konstantes Fördervolumen, ein hohes Druckverhältnis und ein niedriges Fördervolumen aufweist. Gleichzeitig ist es vorteilhaft, wenn das zweite Gebläse eine veränderbare Drehzahl, ein niedriges Druckverhältnis und ein hohes Fördervolumen aufweist.

Das erste Gebläse sorgt für ständig in gleicher Menge angesaugte Frischluft, während das zweite Gebläse die Umwälzung der im Fahrerhaus befindlichen Luft bewirkt. Dabei läßt sich ein konstanter Luftinnendruck erreichen bei gleichzeitiger Möglichkeit für den Fahrer, die Luftströmung innerhalb des Fahrerhauses zu verändern.

Eine weitere zweckmäßige Ausbildung der Erfindung ist durch folgende Merkmale gekennzeichnet:
- Das erste Gebläse steht über seinen Ansaugstutzen mit einem Luftkanal in Verbindung, der zumindest eine mit der Außenatmosphäre in Verbindung stehende Öffnung aufweist;
- der Temperaturregler umfaßt eine Heizung, eine Klimaanlage und eine die Menge der durchtretenden Luft regulierende Reguliereinrichtung;
- die genannten Leitungen sind dem Temperaturregler nachgeschaltet.

Bei dieser Ausbildung können alle wesentlichen Aggregate der Luftverteileinrichtung auf dem Boden des Fahrerhauses angeordnet werden, wodurch der Schwerpunkt des Fahrzeuges im Vergleich zu der vorbekannten Ausführungsform in vorteilhafter Weise nach unten verlagert wird.

Weitere Merkmale und Vorteile der Erfindung sind Gegenstand der Unteransprüche und werden anhand eines Ausführungsbeispieles näher erläutert.

In der Zeichnung ist eine als Beispiel dienende Ausführungsform der Erfindung dargestellt. Es zeigen:

Figur 1 in Seitenansicht einen Traktor mit einem Fahrerhaus, das eine erfindungsgemäße Luftverteileinrichtung aufweist;

Figur 2 einen Ausschnitt aus Figur 1 in vergrößertem Maßstab;

Figur 3 in nochmals vergrößertem Maßstab einen Querschnitt gemäß der Linie 3 - 3 in Figur 2 und

Figur 4 ein Diagramm mit Vergleichskurven für eine herkömmliche und eine erfindungsgemäße Luftverteileinrichtung.

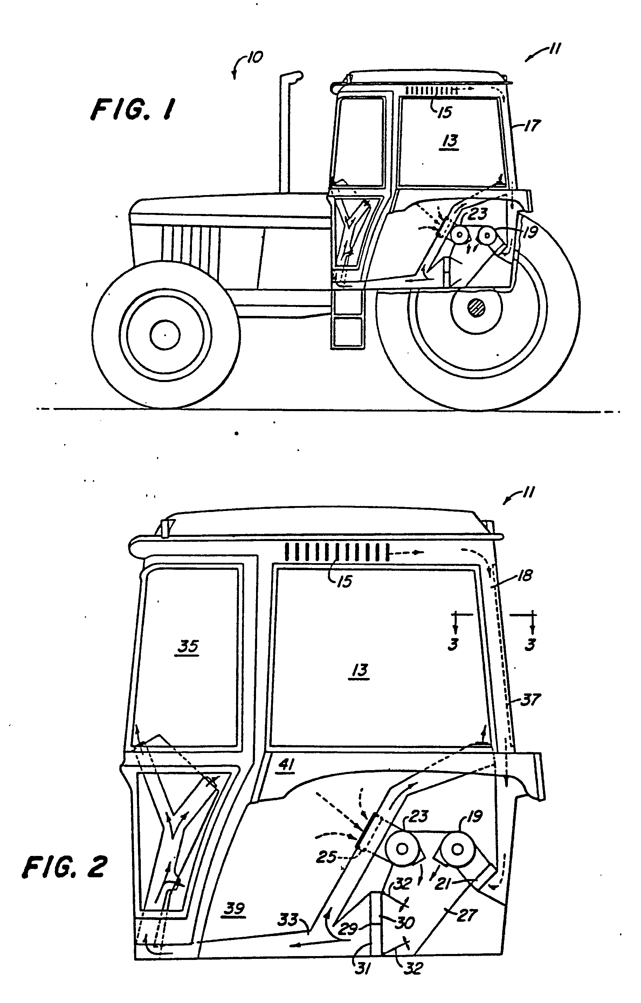

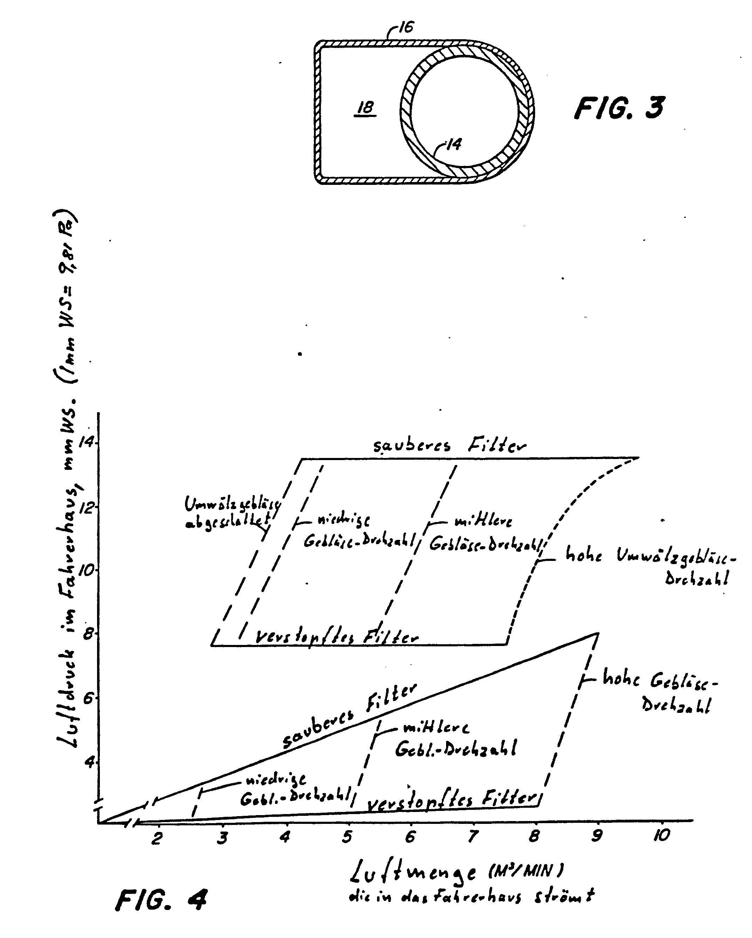

Gemäß Figur 1 weist ein Traktor 10 ein Fahrerhaus 11 auf, das einen Raum 13 für den Fahrer umschließt. Frischluft wird von draußen in das Fahrerhaus 11 durch eine Anzahl Luftschlitze 15 angesaugt, die vorzugsweise in der oberen Hälfte und auf beiden Seiten des Fahrerhauses 11 dicht neben Vertikalstreben 17 angeordnet sind. Letztere können als Luftleitungen dienen, um Frischluft in den Innenraum 13 zu leiten. Figur 3 zeigt eine derartige Ausbildung, bei der ein Überrollbügel 14 umschlossen wird von einem geschlossenen profil 16, das eine Luftleitung 18 bildet.

Gemäß Figur 18 wird die genannte Frischluft durch die genannten Luftschlitze 15 sowie die erwähnte Luftleitung 18 von einem ersten Gebläse 19 angesaugt, das in der Nähe des Bodens des Fahrerhauses 11, vorzugsweise unterhalb und auf der Rückseite des Innenraumes 13 angeordnet ist. Bei diesem ersten Gebläse 19 kann es sich um einen beliebigen Typ eines Gebläses mit konstantem Fördervolumen handeln, bevorzugt wird allerdings ein eine konstante Drehzahl und damit ein konstantes Fördervolumen aufweisendes Gebläse mit hohem Druckverhältnis und niedrigem Fördervolumen. Wichtig ist, daß dieses erste Gebläse die Frischluft mit konstantem Fördervolumen ansaugt, da so in dem Fahrerhaus 11 ein positiver Überdruck sichergestellt werden kann. Diese konstante Luftzufuhr muß ausreichen, um etwaig aus dem Fahrerhaus 11 austretende Luft ersetzen zu können. Werden z.B. die üblichen Luftleckverluste des Fahrerhauses 11 mit 100 cfm (2832 Liter/Min) bei 0,5 Zoll Wassersäulendruck (116 Pa) angenommen, dann sollte das erste Gebläse 19 so ausgelegt sein, daß es etwa die gleiche Frischluftmenge ansaugen und außerdem die Druckabfälle in den Filtern und den Leitungen überwinden kann.

Wird ein positiver Luftüberdruck im Fahrerhaus 11 aufrechterhalten, so wird dadurch sichergestellt, daß bei Luftverlusten die Strömungsrichtung immer nach außen, niemals aber in das Fahrerhaus hinein gerichtet ist. Wäre der äußere Atmosphärendruck größer als der Luftinnendruck im Fahrerhaus, könnte staubige Außenluft in das Fahrerhaus eindringen und dort die Umgebung des Fahrers beeinträchtigen.

Dem ersten Gebläse 19 ist ein erster Luftfilter 21 vorgeschaltet, der die angesaugte Frischluft reinigt und aus üblichem Material, vorzugsweise Papier bestehen kann. Er kann auch in Verbindung mit einem in der Zeichnung nicht dargestellten, dem Filter vorgeschalteten Vorreiniger verwendet werden. Dies ist dann zweckmäßig, wenn der Traktor 10 in staubiger Umgebung eingesetzt wird, wobei der Vorreiniger dann 50 bis 90 % des in der angesaugten Luft enthaltenen Staubes abscheiden kann, während der erste Luftfilter 21 dann einen hohen Prozentsatz der verbleibenden Unreinigungen herausfiltern würde. Die Verwendung eines Vorreinigers führt immer zur Verlängerung der Standzeit des ersten Luftfilters 21, ist aber für das erfindungsgemäße Luftverteilungssystem nicht unbedingt erforderlich.

Dicht neben dem ersten Gebläse 19 ist ein zweites Gebläse 23 angeordnet, das die im Fahrerhaus 11 befindliche Innenluft umwälzt und daher eine veränderbare Drehzahl aufweisen sollte, so daß der Fahrer die Umwälzung der Luft entsprechend seinen Wünschen regulieren kann. Das zweite Gebläse weist vorzugsweise drei Geschwindigkeitsstufen, ein niedriges Druckverhältnis und ein hohes Fördervolumen auf. Ebenso wie das erste Gebläse 19 kann auch das zweite Gebläse 23 ein Luftfilter 25 vorgeschaltet haben, um aus der Innenluft Verunreinigungen herausfiltern zu können. Hierbei handelt es sich in erster Linie um vom Motor in das Fahrerhaus ggf. eingedrungene Abgase sowie um vom Fahrer stammenden Zigarettenrauch.

Die beiden Gebläse 19, 23 blasen die jeweils angesaugte Frischluft bzw. Innenluft in eine Mischzone 27, die aus einer Kammer besteht, in der die beiden Luftströme gemischt werden können, bevor sie weitergeleitet werden. Durch diese Mischung wird sichergestellt, daß angesaugte Frischluft einen Teil der verbrauchten Innenluft ersetzen kann. Der Mischzone 27 nachgeschaltet ist ein Temperaturregler 29 zur Aufbereitung der durch den Temperaturregler hindurchströmenden Luft. Der Temperaturregler 29 umfaßt eine Heizung 30 und eine Klimaanlage 31, die beide vorzugsweise Seite an Seite angeordnet sind, da sie üblicherweise beide gleichzeitig im Einsatz sind. Denn dadurch läßt sich für den Fahrer eine gleichbleibende Umgebung ohne extrem heiße oder kalte Temperaturen schaffen. Zu welchem Grad die Aggregate 30,31 eingeschaltet werden, hängt von den Wünschen des Fahrers ab. An einem warmen Tag können beispielsweise beide Aggregate 30,31 gleichzeitig arbeiten, wobei die Klimaanlage 31 höher eingestellt ist als die Heizung 30; an einem kalten Tag ist die Einstellung umgekehrt. Die Luftverteileinrichtung läßt es aber auch zu, daß die Luft durch den Temperaturregler 29 hindurchströmt, ohne daß die Lufttemperatur erhöht oder verringert wird.

Der Temperaturregler 29 umfaßt ferner eine Reguliereinrichtung 32, mit der sich die durch die Heizung 30 sowie die Klimaeinrichtung 31 hindurchströmende Luftmenge regulieren läßt. Gemäß den Figuren 1 und 2 besteht die Reguliereinrichtung 32 aus zwei einfachen Schwenkklappen, die zwischen einer Offenstellung und einer Schließstellung verschwenkt werden können. Jedoch lassen sich auch beliebig andere Reguliereinrichtungen verwenden.

Die aus der Mischzone 27 durch den Temperaturregler 29 hindurchgetretene Mischluft wird dann in Leitungen 33 kanalisiert, die die Mischluft zu verschiedenen Stellen des Innenraumes 13 des Fahrerhauses leiten. Üblicherweise wird die Luft zur vorderen Windschutzscheibe 35, zum Rückfenster 37, in den Bodenbereich 39 und in den Mittelbereich des Innenraumes 13 des Fahrerhauses transportiert. Anzahl, Größe und Anordnung der Luftaustrittsöffnungen können beliebig vorgesehen werden.

Die neue Luftverteileinrichtung ist insbesondere geeignet für landwirtschaftliche Traktoren und andere außerhalb der Straße einsetzbare Einrichtungen, bei denen staubige oder schmutzige Umgebung zu erwarten ist. Figur 4 zeigt Vergleichsdaten für eine Luftverteileinrichtung gemäß der Erfindung und ein herkömmliches System. Die Kurven im Diagramm lassen die Überlegenheit des neuen Systems erkennen. Die x-Achse gibt die in das Fahrerhaus 11 strömende Luftmenge in Kubikmetern pro Minute an, während die y-Achse den Luftdruck innerhalb des Fahrerhauses 11 in Millimeter Wassersäule angibt. Die unteren Kurven zeigen die Funktion einer herkömmlichen, mit nur einer Luftansaugeinrichtung ausgestatteten Luftverteileinrichtung bei drei verschiedenen Geschwindigkeitsstufen des Gebläses und zwar jeweils für einen sauberen oder verstopften Filter. Es ist zu erkennen, daß der Fahrerhaus-Innendruck auf Null zurückgeht, wenn die Gebläsedrehzahl absinkt und der Filter anfängt zu verstopfen. Bei Verwendung der erfindungsgemäßen Luftverteileinrichtung mit einem zusätzlichen Gebläse für die Umwälzung der Innenluft wird nicht nur der Luftinnendruck des Fahrerhauses konstant gehalten, sondern dieser Druck läßt sich auf einem erheblich höheren Wert halten. Diese höheren Druckwerte lassen sich auch dann aufrechterhalten, wenn die Filter verstopfen, was sich bei den herkömmlichen Systemen nicht erreichen läßt.

## Patentansprüche

1. Luftverteileinrichtung für das Fahrerhaus (11) eines Fahrzeuges, insbesondere eines Traktors (10), bestehend aus zwei Gebläsen (19, 23), von denen das erste Gebläse (i9) von außen Frischluft in das Fahrerhaus (11) saugt, aus einem dem ersten Gebläse (19) vorgeschalteten Filter (21), aus einem dem ersten Gebläse nachgeschalteten Temperaturregler (29) zum Erwärmen oder Kühlen der angesaugten Luft, und aus Leitungen (33) zur Luftführung und -verteilung im Innenraum des Fahrerhauses, dadurch gekennzeichnet, daß das in der Nähe des ersten Gebläses (19) angeordnete zweite Gebläse (23) Rauminnenluft umwälzt und dabei die angesaugte Innenluft in eine Mischzone (27) drückt, die zwischen den Druckstutzen des ersten Gebläses (19) und den genannten Temperaturregler (29) geschaltet ist.

2. Einrichtung nach Anspruch 1, dadurch gekennzeichnet, daß das erste Gebläse (19) ein konstantes Fördervolumen aufweist.

3. Einrichtung nach Anspruch 1 oder 2, dadurch gekennzeichnet, daß das erste Gebläse (19) ein hohes Druckverhältnis und ein niedriges Fördervolumen aufweist.

4. Einrichtung nach Anspruch 1, 2 oder 3, dadurch gekennzeichnet, daß dem Filter (21) eine Vorreinigung vorgeschaltet ist.

5. Einrichtung nach einem der vorhergehenden Ansprüche, dadurch gekennzeichnet, daß das zweite Gebläse (23) eine veränderbare Drehzahl aufweist.

6. Einrichtung nach einem der vorhergehenden Ansprüche, dadurch gekennzeichnet, daß das zweite Gebläse (23) ein niedriges Druckverhältnis und ein hohes Fördervolumen aufweist.

7. Einrichtung nach einem der vorhergehenden Ansprüche, dadurch gekennzeichnet, daß dem zweiten Gebläse (23) ein Filter (25) vorgeschaltet ist.

8. Einrichtung nach einem der vorhergehenden Ansprüche, gekennzeichnet durch folgende Merkmale:
- Das erste Gebläse (19) steht über seinen Ansaugstutzen mit einem Luftkanal (18) in Verbindung, der zumindest eine mit der Außenatmosphäre in Verbindung stehende Öffnung (15) aufweist;
- der Temperaturregler (29) umfaßt eine Heizung (30), eine Klimaanlage (31) und eine die Menge der durchtretenden Luft regulierende Reguliereinrichtung (32);
- die genannten Leitungen (33) sind dem Temperaturregler (29) nachgeschaltet.

9. Einrichtung nach Anspruch 8, dadurch gekennzeichnet, daß der genannte Luftkanal (18) ein Paar im Abstand voneinander angeordnete Rahmenstreben (17) umfaßt, deren zu oberst liegenden Öffnungen (15) mit der Außenatmosphäre in Verbindung stehen.

10. Einrichtung nach Anspruch 9, gekennzeichnet durch folgende Merkmale:
- Das erste Gebläse (19) liegt unterhalb von den genannten Öffnungen (15);
- die Heizung (30) weist eine Reguliereinrichtung (32) für die Menge der durchtretenden Mischluft auf;
- für die Mischluft ist neben der Heizung (30) eine Kühlung (31) angeordnet, die eine Reguliereinrichtung (32) für die Menge der durchtretenden Luft aufweist, wobei Heizung (30) und/oder Kühlung (31) wahlweise eingeschaltet werden können.

## Claims

1. An air distribution system for the operator's cab (11) of a vehicle, especially of a tractor (10), comprising two blower means (19, 23), the first blower means (19) for drawing fresh outside air into said operator's cab (11), a filter (21) positioned upstream of said first blower means (19), a temperature controller (29) positioned down-stream of said first blower means for heating or cooling the drawn-in air, and ductwork (33) for routing and distributing air throughout the interior of said operator's cab, characterized in that said second blower means (23), positioned proximate said first blower means (19), recirculates inside air pressing thereby the drawn-in inside air into a mixing zone (27) positioned between the outlet of the first blower means (19) and said temperature controller (29).

2. The system according to claim 1, wherein said first blower means (19) is a constant-volume blower.

3. The system according to claim 1 or 2, wherein the first blower means (19) is a highpressure, low-volume blower.

4. The system according to claim 1, 2 or 3, wherein a precleaner is positioned upstream of said filter (21).

5. The system according to one of the preceding claims, wherein the second blower means (23) has a variable speed.

6. The system according to one of the preceding claims, wherein the second blower means (23) is a low-pressure, high-volume blower.

7. The system according to one of the preceding claims, wherein a filter (25) is positioned upstream of the second blower means (23).

8. The system according to one of the preceding claims, characterized by the following features:
- Said first blower means (19) communicating via its inlet with an air channel (18) which has at least one opening (15) communicating with the outside atmosphere;
- said temperature controller (29) including a heating unit (30), an air-conditioning unit (31) and regulating means (32) for regulating the amount of air which passes therethrough;
- said ductwork (33) being positioned downstream of said temperature controller (29).

9. The system according to claim 8, wherein said air channel (18) comprises a pair of spaced struts (17), each having an uppermost opening (15) communicating with the outside atmosphere.

10. The system of claim 9, characterized by the following features:
- Said first blower means (19) being positioned below said openings (15);
- said heating unit (30) including regulating means (32) for the amount of mixed air passing therethrough;
- a cooling unit (31) for the mixed air is positioned adjacent to said heating unit (30) and includes regulating means (32) for the amount of air passing therethrough, said heating unit (30) and/or cooling unit (31) being selectively operated.

**Revendications**

1°) Installation de distribution d'air pour la cabine de conduite (11) d'un véhicule, en particulier d'un tracteur (10), comprenant deux ventilateurs (19, 23) dont le premier ventilateur (19) aspire de l'air frais de l'extérieur à l'intérieur de la cabine de conduite (11), un filtre (21) monté en amont du premier ventilateur (19), un dispositif thermostatique (29) monté en aval du premier ventilateur, pour réchauffer ou refroidir l'air aspiré, et des conduites (33) pour l'amenée et la distribution de l'air dans l'habitacle de la cabine de conduite, caractérisée en ce que le second ventilateur (23), placé au voisinage du premier ventilateur (19), fait circuler de l'air intérieur à l'habitacle et refoule en même temps l'air intérieur aspiré dans une zone de mélange (27) intercalée entre la tubulure de refoulement du premier ventilateur (19) et ledit dispositif thermostatique (29).

2°) Installation selon la revendication 1, caractérisée en ce que le premier ventilateur (19) présente un débit constant.

3°) Installation selon la revendication 1 ou 2, caractérisée en ce que le premier ventilateur (19) présente un taux de compression élevé et un débit faible.

4°) Installation selon la revendication 1, 2 ou 3, caractérisée en ce qu'un épurateur préalable est monté en amont du filtre (21).

5°) Installation selon l'une des revendications précédentes, caractérisée en ce que le second ventilateur (23) présente une vitesse de rotation variable.

6°) Installation selon l'une des revendications précédentes, caractérisée en ce que le second ventilateur (23) présente un taux de compression faible et un débit éleve.

7°) Installation selon l'une des revendications précédentes, caractérisée en ce qu'un filtre (25) est monté en amont du second ventilateur (23).

8°) Installation selon l'une des revendications précédentes, caractérisée par les caractéristiques suivantes
- le premier ventilateur (19) communique, par sa tubulure d'aspiration, avec un canal d'air (18) qui comporte au moins une ouverture (15) en liaison avec l'atmosphère extérieure;
- le dispositif thermostatique (29) comprend un dispositif de chauffage (30), un dispositif de climatisation (31) et un dispositif de réglage (32) réglant le débit d'air qui les traverse;
- les conduites (33) indiquées sont placées en aval du dispositif thermostatique (29).

9°) Installation selon la revendication 8, caractérisée en ce que le canal d'air (18) indiqué comprend deux membrures de châssis (17) disposées à distance l'une de l'autre, dont les ouvertures (15) situées vers le haut communiquent avec l'atmosphere exterieure.

10°) Installation selon la revendication 9, caractérisée par les caractéristiques suivantes:
- le premier ventilateur (19) est situé au-dessous des ouvertures (15) indiquées;
- le dispositif de chauffage (30) comporte un dispositif (32) de réglage du débit d'air mélangé qui le traverse;
- pour l'air mélangé, un dispositif de refroidissement (31) est placé à côté du dispositif de chauffage (30) et comporte un dispositif (32) de réglage du débit d'air qui le traverse, le dispositif de chauffage (30) et/ou le dispositif de refroidissement (31) pouvant être mis en circuit à volonté.

0 042 597

FIG. 1

FIG. 2

1

FIG. 3

FIG. 4

Luftdruck im Fahrerhaus, mm WS. (1mm WS = 9,81 Pa)

sauberes Filter

Umwälzgebläse abgeschaltet

niedrige Gebläse-Drehzahl

mittlere Gebläse-Drehzahl

hohe Umwälzgebläse-Drehzahl

verstopftes Filter

sauberes Filter

mittlere Gebl.-Drehzahl

hohe Gebläse-Drehzahl

niedrige Gebl.-Drehzahl

verstopftes Filter

Luftmenge (M³/MIN)
die in das Fahrerhaus strömt